# EUROPÄISCHE PATENTANMELDUNG

(11) **EP 3 576 278 A1**
(43) Veröffentlichungstag der Anmeldung: **04.12.2019**
(21) Anmeldenummer: 18174782.5
(22) Anmeldetag: 29.05.2018
(51) Int. Cl.: H02M 5/293, H02M 5/297, H02M 5/22, H02M 5/458, B60L 9/00, B60L 9/24

(54) **FREQUENZUMRICHTER**

(71) Anmelder: Siemens Aktiengesellschaft, 80333 München (DE)
(72) Erfinder: Bakran, Mark-Matthias, 91052 Erlangen (DE); Böhmer, Jürgen, 90547 Stein (DE); Helsper, Martin, 90584 Allersberg (DE); Krafft, Eberhard Ulrich, 90419 Nürnberg (DE); Laska, Bernd, 91074 Herzogenaurach (DE); Nagel, Andreas, 90431 Nürnberg (DE); Schönewolf, Stefan Hans Werner, 90489 Nürnberg (DE); Weigel, Jan, 91077 Großenbuch (DE)

(57) **Zusammenfassung**

Ein Frequenzumrichter (1) weist eine Kondensatoreinrichtung (2), einen eingangsseitigen Wechselrichter (4) und einen ausgangsseitigen Wechselrichter (10) auf. Der eingangsseitige Wechselrichter (4) weist eingangsseitige Schaltpfade (5) auf, die jeweils zwei in Reihe geschaltete Halbleiter-Schalteinrichtungen (6) mit einem dazwischen angeordneten Knotenpunkt (7) aufweisen. Enden der eingangsseitigen Schaltpfade (5) sind mit der Kondensatoreinrichtung (2) verbunden, die Knotenpunkte (7) mit den Phasen eines eingangsseitigen Versorgungsnetzes (8). Der ausgangsseitige Wechselrichter (10) weist ausgangsseitige Schaltpfade (11) auf, die jeweils zwei in Reihe geschaltete Halbleiter-Schalteinrichtungen (12) mit einem dazwischen angeordneten Knotenpunkt (13) aufweisen. Enden der ausgangsseitigen Schaltpfade (11) sind mit der Kondensatoreinrichtung (2) verbunden, die Knotenpunkte (13) mit den Phasen eines dem Frequenzumrichter (1) nachgeordneten Transformators (14). Die ausgangsseitigen Halbleiter-Schalteinrichtungen (12) weisen als Halbleiterschalter (18) unipolare Halbleiterbauelemente auf.

## Beschreibung

Die vorliegende Erfindung geht aus von einem Frequenzumrichter,
- wobei der Frequenzumrichter eine Kondensatoreinrichtung aufweist,
- wobei der Frequenzumrichter einen eingangsseitigen Wechselrichter aufweist, der seinerseits eine Anzahl von eingangsseitigen Schaltpfaden aufweist, die ihrerseits jeweils zwei in Reihe geschaltete eingangsseitige Halbleiter-Schalteinrichtungen und jeweils einen zwischen den beiden jeweiligen eingangsseitigen Halbleiter-Schalteinrichtungen angeordneten eingangsseitigen Knotenpunkt aufweisen,
- wobei Enden der eingangsseitigen Schaltpfade mit der Kondensatoreinrichtung verbunden sind und die eingangsseitigen Knotenpunkte jeweils mit einer Phase eines eingangsseitigen Versorgungsnetzes verbindbar sind,
- wobei der Frequenzumrichter einen ausgangsseitigen Wechselrichter aufweist, der seinerseits eine Anzahl von ausgangsseitigen Schaltpfaden aufweist, die ihrerseits jeweils zwei in Reihe geschaltete ausgangsseitige Halbleiter-Schalteinrichtungen und jeweils einen zwischen den beiden jeweiligen ausgangsseitigen Halbleiter-Schalteinrichtungen angeordneten ausgangsseitigen Knotenpunkt aufweisen,
- wobei Enden der ausgangsseitigen Schaltpfade mit der Kondensatoreinrichtung verbunden sind und die ausgangsseitigen Knotenpunkte jeweils mit einer Phase eines dem Frequenzumrichter nachgeordneten Transformators verbindbar sind.

Die vorliegende Erfindung geht weiterhin aus von einem elektrischen Antrieb,
- wobei der elektrische Antrieb einen derartigen Frequenzumrichter aufweist,
- wobei dem Transformator ein Stromrichter nachgeordnet ist und
- wobei der Stromrichter mindestens eine elektrische Maschine speist.

Ein derartiger Frequenzumrichter und der zugehörige elektrische Antrieb sind beispielsweise aus der DE 103 23 218 A1 bekannt.

Elektrische Eisenbahnsysteme arbeiten üblicherweise mit einer einphasigen Wechselspannung, welche elektrisch angetriebenen Schienenfahrzeugen über eine oberhalb der Geleise verlaufende Oberleitung zugeführt wird. Typisch sind eine Wechselspannung mit einer Nennspannung von 15 kV und einer Frequenz von 16 2/3 Hz oder eine Wechselspannung mit einer Nennspannung von 25 kV und einer Frequenz von 50 Hz. Es sind aber auch andere Spannungssysteme bekannt. Die hohe Wechselspannung wird gewählt, weil dadurch in der Oberleitung vergleichsweise niedrige Ströme fließen und somit elektrische Verluste minimiert werden können.

Fahrmotoren und Traktionsstromrichter von elektrischen Bahnen sind nicht für eine derart hohe Wechselspannung ausgelegt, sondern nur für wesentlich geringere Betriebsspannungen. Dadurch können insbesondere die Anforderungen an die elektrische Isolation reduziert werden. Die Wechselspannung der Oberleitung muss daher entsprechend herabgesetzt werden, bevor die elektrische Energie den Traktionsstromrichtern und den Fahrmotoren zugeführt wird. Vorzugsweise wird zugleich auch die elektrische Ausrüstung des Schienenfahrzeugs galvanisch von der Oberleitung getrennt. Dadurch führt ein Isolationsfehler beispielsweise eines Fahrmotors gegenüber dem Erdpotenzial nicht zu einem Kurzschlussstrom, sondern nur zum Auslösen einer Isolationsüberwachung.

Im konventionellen Stand der Technik wird die Wechselspannung der Fahrleitung mittels eines Transformators auf die Eingangsspannung des Traktionsstromrichters heruntergesetzt. Durch den Transformator wird zugleich auch die galvanische Trennung zwischen dem Antrieb einerseits und der Wechselspannung andererseits realisiert. Derartige Systeme benötigen - abgesehen von geeigneten Abschalt-, Filter-, Mess- und Schutzeinrichtungen primärseitig des Transformators - keine weiteren Einrichtungen.

Der Transformator des konventionellen Standes der Technik muss für die Betriebsfrequenz ausgelegt werden, welche die Wechselspannung der Oberleitung aufweist, also beispielsweise für eine Betriebsfrequenz von 16 2/3 Hz oder 50 Hz. Transformatoren, die mit derart geringen Frequenzen betrieben werden, müssen groß und schwer ausgelegt werden. Sie bestimmen in erheblichem Umfang die Fahrzeuggestaltung.

Die Wechselspannung der Oberleitung als solche kann nicht variiert werden, da dies mit erheblichem Aufwand bei der Veränderung der zu Grunde liegenden Infrastruktur verbunden wäre. Es sind jedoch verschiedene Ansätze bekannt, die Wechselspannung der Oberleitung innerhalb des Schienenfahrzeugs mittels eines Frequenzumrichters zunächst auf eine andere, erheblich höhere Frequenz umzusetzen und dem Frequenzumrichter einen Transformator nachzuordnen, beispielsweise einen Mittelfrequenztransformator für Frequenzen im Kilohertzbereich. Durch diese Ansätze können die Größe und das Gewicht des Transformators reduziert werden. Einer der Ansätze ist in der eingangs genannten DE 103 23 218 A1 beschrieben.

Bei der DE 103 23 218 A1 werden die eingangsseitigen Halbleiter-Schalteinrichtungen mit einer niedrigen Frequenz getaktet, beispielsweise mit der Frequenz der eingangsseitigen Wechselspannung von 16 2/3 Hz bzw. 50 Hz. Die über die Kondensatoreinrichtung abfallende Zwischenkreisspannung sollte nach Möglichkeit derart geführt werden, dass sie dem Betrag eines Sinus folgt, wobei die Frequenz des Sinus mit der Frequenz der eingangsseitigen Wechselspannung übereinstimmt. Die Amplitude stimmt - zumindest im Wesentlichen - mit der Amplitude der eingangsseitigen Wechselspannung überein. Die ausgangsseitigen Halbleiter-Schalteinrichtungen werden mit einer erheblich größeren Frequenz getaktet, beispielsweise mit einer Frequenz im einstelligen oder zweistelligen kHz-Bereich nennen.

Diese vom Ansatz her aus der DE 103 23 218 A1 bekannte Vorgehensweise weist verschiedene Vorteile auf. Insbesondere können die Schaltverluste in den eingangsseitigen Halbleiter-Schalteinrichtungen gering gehalten werden und können weiterhin auch Netzrückwirkungen gering gehalten werden.

Um diese positiven Wirkungen zu erzielen, ist es jedoch erforderlich, dass die über der Kondensatoreinrichtung abfallende Zwischenkreisspannung möglichst ideal dem Betrag des Sinus folgt. Hierbei stellt sich in der Praxis das Problem, dass ein reproduzierbares Schaltverhalten der ausgangsseitigen Halbleiter-Schalteinrichtungen, die im kHz-Bereich geschaltet werden, nur dann gewährleistet werden kann, wenn die Zwischenkreisspannung einen nennenswerten Wert aufweist, meist etwa ein Drittel der maximalen Zwischenkreisspannung. Dadurch treten in der Praxis trotz der vom Ansatz her sehr vielversprechenden Vorgehensweise starke Netzrückwirkungen auf. Zur Vermeidung derartiger Netzrückwirkungen sind zusätzliche Filterkomponenten erforderlich.

Die Aufgabe der vorliegenden Erfindung besteht darin, Möglichkeiten zu schaffen, mittels derer ein reproduzierbares Schaltverhalten der ausgangsseitigen Halbleiter-Schalteinrichtungen auch bei einer niedrigen Zwischenkreisspannung - insbesondere weniger als 10 % der maximalen Zwischenkreisspannung - gewährleistet werden kann.

Die Aufgabe wird durch einen Frequenzumrichter mit den Merkmalen des Anspruchs 1 gelöst. Vorteilhafte Ausgestaltungen des Frequenzumrichters sind Gegenstand der abhängigen Ansprüche 2 bis 8.

Erfindungsgemäß wird ein Frequenzumrichter der eingangs genannten Art dadurch ausgestaltet, dass die ausgangsseitigen Halbleiter-Schalteinrichtungen als Halbleiterschalter unipolare Halbleiterbauelemente, insbesondere MOSFETs, aufweisen.

Unipolare Schaltelemente weisen - im Gegensatz zu den üblicherweise verwendeten IGBTs, welche bipolare Schaltelemente sind - ein Schaltverhalten auf, das unabhängig von der mittels des jeweiligen unipolare Halbleiterbauelements geschalteten Spannung und damit unabhängig von der Zwischenkreisspannung ist.

Beispielsweise weisen übliche MOSFETs auf Basis von Silizium (Si) eine relativ geringe Sperrspannung von nur wenigen 100 V auf, beispielsweise von ca. 600 V. Die Sperrspannung ist diejenige Spannung, die mittels des jeweiligen MOSFETs bzw. allgemein des jeweiligen Halbleiterschalters noch sicher gesperrt werden kann, die also von dem entsprechenden MOSFETs bzw. allgemein Halbleiterschalter noch sicher durchgeschaltet und auch wieder gesperrt werden kann. Wenn die Halbleiter-Schalteinrichtungen mit derartigen MOSFETs realisiert würden, wären sehr viele in Reihe geschaltete MOSFETs erforderlich, um die nötige Betriebssicherheit zu gewährleisten. Mit der Anzahl an in Reihe geschalteten Halbleiterschaltern erhöhen sich jedoch sowohl der Verdrahtungsaufwand als auch der Steuerungs- und Schaltungsaufwand enorm. Vorzugsweise sind die ausgangsseitigen Halbleiterschalter daher als unipolare Halbleiterbauelemente auf SiC-Basis ausgebildet. Unipolare Halbleiterbauelemente auf Basis von Siliziumcarbid (SiC) - beispielsweise MOSFETs - können erheblich höhere Sperrspannungen im Bereich von mehreren kV aufweisen, beispielsweise eine Sperrspannung von 3,3 kV oder 6,5 kV. Bei Verwendung derartiger unipolarer Halbleiter Schaltelemente halten sich der Verdrahtungsaufwand und der Steuerungs- und Schaltungsaufwand in vernünftigen Grenzen.

Die eingangsseitigen Halbleiter-Schalteinrichtungen können hingegen als Halbleiterschalter nach Bedarf unipolare Halbleiterbauelemente auf SiC-Basis oder - wie im Stand der Technik auch - SiC-IGBTs oder Si-IGBTs aufweisen. Die Verwendung von IGBTs auf Si- oder SiC-Basis auf der Eingangsseite des Frequenzumrichters ist unkritisch, weil die Halbleiter-Schalteinrichtungen auf der Eingangsseite mit einer erheblich niedrigeren Taktrate als die Halbleiter-Schalteinrichtungen auf der Ausgangsseite des Wechselrichters geschaltet werden.

In der Regel liegt die Nennspannung des Versorgungsnetzes im Bereich von etlichen kV, beispielsweise bei 15 kV oder 25 kV. In derartigen Fällen weisen die eingangsseitigen und die ausgangsseitigen Halbleiter-Schalteinrichtungen jeweils Reihenschaltungen von mehreren Halbleiterschaltern auf. Die einzelnen Halbleiterschalter sind jeweils für eine Sperrspannung ausgelegt. Die Anzahl an Halbleiterschaltern pro Halbleiter-Schalteinrichtung ist derart bestimmt, dass das Produkt der Sperrspannung mit der Anzahl an Halbleiterschaltern pro Halbleiter-Schalteinrichtung in hinreichendem Umfang oberhalb der Amplitude der Spannung des Versorgungsnetzes liegt. In der Praxis bedeutet dies - allgemein gesprochen - in aller Regel eine Spannung oberhalb von 10 kV.

Wenn beispielsweise die Sperrspannung eines einzelnen Halbleiterschalters 3,3 kV beträgt und hiervon nur etwa 2/3 genutzt werden sollen und weiterhin die Nennspannung 15 kV beträgt, müssen zwölf Halbleiterschalter in Reihe geschaltet werden. Bei einer Nennspannung von 25 kV muss die Anzahl an Halbleiterschaltern pro Halbleiter-Schalteinrichtung entsprechend höher gewählt sein. Wenn alternativ beispielsweise die Sperrspannung eines einzelnen Halbleiterschalters 6,5 kV beträgt, müssen bei einer Nennspannung von 25 kV mindestens acht, besser neun oder zehn, Halbleiterschalter in Reihe geschaltet werden. Bei anderen Nennspannungen und anderen Sperrspannungen und anderen Sicherheitsreserven ergeben sich andere Werte, das Berechnungsschema bleibt aber das gleiche.

Es ist weiterhin von Vorteil, den Halbleiterschaltern Überbrückungsschalter parallel zu schalten. Die Überbrückungsschalter sind im Regelfall geöffnet, so dass der jeweilige Halbleiterschalter seine Funktion als Schaltelement erfüllen kann. Falls einer der Halbleiterschalter defekt wird, kann der jeweilige Überbrückungsschalter aber auch geschlossen werden, so dass er den jeweiligen Halbleiterschalter überbrückt. Dadurch wird ein Weiterbetrieb des Frequenzumrichters trotz des defekten Halbleiterschalters ermöglicht. Die Gesamtzahl an in Reihe geschalteten Halbleiterschaltern muss in diesem Fall selbstverständlich entsprechend erhöht werden.

Bezüglich der Ausgestaltung des ausgangsseitigen Wechselrichters sind zwei Alternativen möglich.

Zum einen ist es möglich, dass die Anzahl an ausgangsseitigen Schaltpfaden mit der Anzahl an Phasen des Transformators übereinstimmt und dass die Knotenpunkte der ausgangsseitigen Schaltpfade jeweils mit einer der Phasen des Transformators verbindbar sind. Diese Ausgestaltung ist sowohl bei einem (einphasigen) Wechselspannungstransformator als auch bei einem mehrphasigen Drehspannungstransformator realisierbar.

Zum anderen ist es möglich, dass der ausgangsseitige Wechselrichter nur einen einzelnen ausgangsseitigen Schaltpfad aufweist, dass die Kondensatoreinrichtung eine Reihenschaltung von mehreren Kondensatoren aufweist und dass zwischen zwei der in Reihe geschalteten Kondensatoren der Kondensatoreinrichtung ein weiterer Knotenpunkt angeordnet ist, über den eine weitere Phase des Transformators mit der Kondensatoreinrichtung verbindbar ist. Diese Ausgestaltung ist nur bei einem (einphasigen) Wechselspannungstransformator realisierbar. Bei dieser Ausgestaltung des Frequenzumrichters verdoppelt sich gegenüber der Ausgestaltung, bei der die Anzahl an ausgangsseitigen Schaltpfaden mit der Anzahl an Phasen des Transformators übereinstimmt, die Zwischenkreisspannung. Demzufolge muss pro Halbleiterschalteinrichtung auch die Anzahl an in Reihe geschalteten Halbleiterschaltern entsprechend erhöht werden.

In analoger Weise sind auch bezüglich der Ausgestaltung des eingangsseitigen Wechselrichters zwei Alternativen möglich.

Zum einen ist es möglich, dass die Anzahl an eingangsseitigen Schaltpfaden mit der Anzahl an Phasen des Versorgungsnetzes übereinstimmt und dass die Knotenpunkte der eingangsseitigen Schaltpfade jeweils mit einer der Phasen des Versorgungsnetzes verbindbar sind.

Zum anderen ist es möglich, dass der eingangsseitige Wechselrichter nur einen einzelnen eingangsseitigen Schaltpfad aufweist, dass die Kondensatoreinrichtung eine Reihenschaltung von mehreren Kondensatoren aufweist und dass zwischen zwei der in Reihe geschalteten Kondensatoren der Kondensatoreinrichtung ein weiterer Knotenpunkt angeordnet ist, über den eine weitere Phase des Versorgungsnetzes mit der Kondensatoreinrichtung verbindbar ist. Auch bei dieser Ausgestaltung des Frequenzumrichters verdoppelt sich gegenüber der Ausgestaltung, bei der die Anzahl an eingangsseitigen Schaltpfaden mit der Anzahl an Phasen des Versorgungsnetzes übereinstimmt, die Zwischenkreisspannung. Auch hier muss daher pro Halbleiter-schalteinrichtung die Anzahl an in Reihe geschalteten Halbleiterschaltern entsprechend erhöht werden.

Die Aufgabe wird weiterhin durch einen elektrischen Antrieb mit den Merkmalen des Anspruchs 9 gelöst. Eine vorteilhafte Ausgestaltung ist Gegenstand des abhängigen Anspruchs 10.

Erfindungsgemäß ist bei einem elektrischen Antrieb der eingangs genannten Art der Frequenzumrichter erfindungsgemäß ausgebildet.

Der elektrische Antrieb kann insbesondere als Traktionsantrieb eines Schienenfahrzeugs ausgebildet sein. In diesem Fall sind die eingangsseitigen Knotenpunkte in der Regel mit einem als Oberleitungsnetz ausgebildeten Versorgungsnetz verbindbar.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Frequenzumrichter,
- FIG 2: ein Zeitdiagramm,
- FIG 3: eine eingangsseitige Halbleiter-Schalteinrichtung,
- FIG 4: eine ausgangsseitige Halbleiter-Schalteinrichtung,
- FIG 5: einen elektrischen Antrieb,
- FIG 6: ein Schienenfahrzeug,
- FIG 7: einen weiteren Frequenzumrichter,
- FIG 8: einen weiteren Frequenzumrichter und
- FIG 9: einen weiteren Frequenzumrichter.

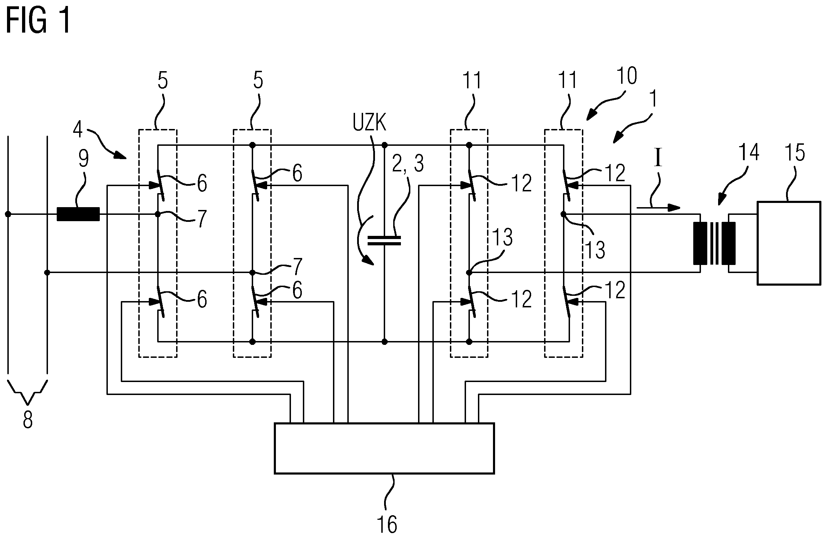

Gemäß FIG 1 weist ein Frequenzumrichter 1 eine Kondensatoreinrichtung 2 auf. Die Kondensatoreinrichtung 2 kann aus einem einzelnen Kondensator 3 oder mehreren Kondensatoren 3 bestehen, die nach Bedarf in Reihe und/oder parallel geschaltet sind.

Der Frequenzumrichter 1 weist weiterhin einen eingangsseitigen Wechselrichter 4 auf. Der eingangsseitige Wechselrichter 4 weist eine Anzahl von Schaltpfaden 5 auf, nachfolgend als eingangsseitige Schaltpfade 5 bezeichnet. Die eingangsseitigen Schaltpfade 5 weisen jeweils zwei in Reihe geschaltete Halbleiter-Schalteinrichtungen 6 auf, nachfolgend als eingangsseitige Halbleiter-Schalteinrichtungen 6 bezeichnet. Zwischen den beiden eingangsseitigen Halbleiter-Schalteinrichtungen 6 des jeweiligen eingangsseitigen Schaltpfades 5 ist jeweils ein Knotenpunkt 7 angeordnet, nachfolgend als jeweiliger eingangsseitiger Knotenpunkt 7 bezeichnet.

Enden der eingangsseitigen Schaltpfade 5 sind mit der Kondensatoreinrichtung 2 verbunden. Die eingangsseitigen Knotenpunkte 7 sind jeweils mit einer Phase eines eingangsseitigen Versorgungsnetzes 8 verbunden. In der Regel ist in der Verbindung mit dem Versorgungsnetz 8 eine Induktivität 9 angeordnet.

Der Frequenzumrichter 1 weist weiterhin einen ausgangsseitigen Wechselrichter 10 auf. Der ausgangsseitige Wechselrichter 10 weist eine Anzahl von Schaltpfaden 11 auf, nachfolgend als ausgangsseitige Schaltpfade 11 bezeichnet. Die ausgangsseitigen Schaltpfade 11 weisen jeweils zwei in Reihe geschaltete Halbleiter-Schalteinrichtungen 12 auf, nachfolgend als ausgangsseitige Halbleiter-Schalteinrichtungen 12 bezeichnet. Zwischen den beiden ausgangsseitigen Halbleiter-Schalteinrichtungen 12 des jeweiligen ausgangsseitigen Schaltpfades 11 ist jeweils ein Knotenpunkt 13 angeordnet, nachfolgend als jeweiliger ausgangsseitiger Knotenpunkt 13 bezeichnet.

Enden der ausgangsseitigen Schaltpfade 11 sind ebenfalls mit der Kondensatoreinrichtung 2 verbunden. Die ausgangsseitigen Knotenpunkte 13 sind jeweils mit einer Phase eines Transformators 14 verbunden, welcher dem Frequenzumrichter 1 nachgeordnet ist. Hinter dem Transformator 14 ist eine Last 15 angeordnet

Der Frequenzumrichter 1 wird von einer Steuereinrichtung 16 gesteuert.

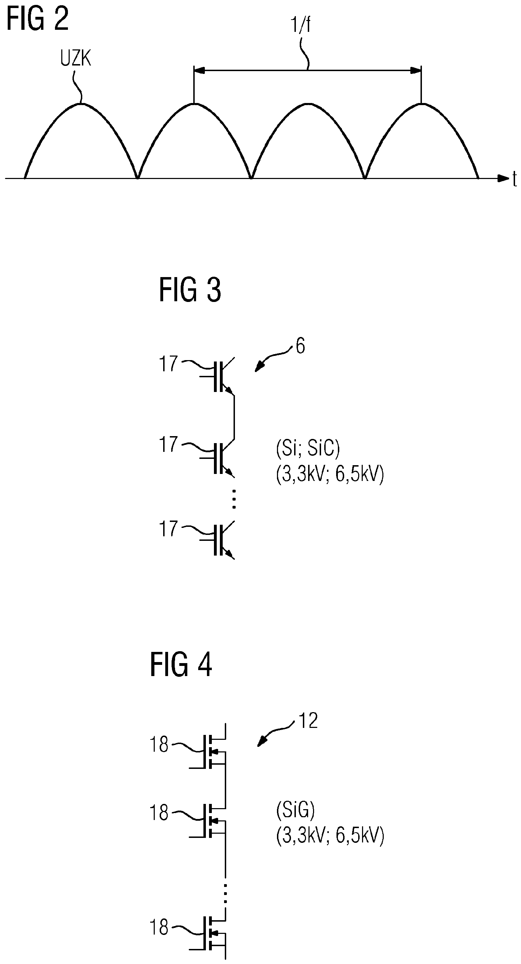

Die Steuereinrichtung 16 steuert den eingangsseitigen Wechselrichter 4 derart, dass die Zwischenkreisspannung UZK - also die über der Kondensatoreinrichtung 2 abfallende Spannung - entsprechend der Darstellung in FIG 2 als Funktion der Zeit t mit dem Betrag eines Sinus steigt und fällt. Der Sinus definiert eine Basisfrequenz f. Die Steuereinrichtung 16 steuert den eingangsseitigen Wechselrichter 4 mit der Basisfrequenz f oder einem niedrigen ganzzahligen Vielfachen der Basisfrequenz f, meist einem ungeradzahligen Vielfachen der Basisfrequenz f, insbesondere dem Dreifachen oder dem Fünffachen der Basisfrequenz f. Die Basisfrequenz f entspricht der Frequenz des Versorgungsnetzes 8. Sie kann beispielsweise bei 16 2/3 Hz oder bei 50 Hz liegen. Die Amplitude der Zwischenkreisspannung UZK ist durch die Spannung des Versorgungsnetzes 8 bestimmt. Sie kann insbesondere mit der Amplitude der Spannung des Versorgungsnetzes 8 in etwa übereinstimmen. Die Induktivität 9 bewirkt insbesondere, dass die Zwischenkreisspannung UZK eine Phasenverschiebung zur Spannung des Versorgungsnetzes 8 aufweisen kann.

Die Steuereinrichtung 16 steuert weiterhin den ausgangsseitigen Wechselrichter 10 derart, dass an den Transformator 14 ein Wechselstrom I abgegeben wird, der zumindest temporär eine Frequenz aufweist, die erheblich größer als die Basisfrequenz f ist. Die Frequenz wird nachfolgend als Transformatorfrequenz bezeichnet. Die Transformatorfrequenz kann insbesondere bei 1 kHz oder darüber liegen. Die Transformatorfrequenz kann insbesondere dann und solange den höheren Wert von beispielsweise 1 kHz oder darüber aufweisen, wenn und solange die Zwischenkreisspannung UZK einen hinreichend hohen Wert aufweist, sich also nicht in der Nähe eines Nulldurchgangs des Sinus befindet. In der Praxis hat es sich als ausreichend erwiesen, wenn die der momentane Wert der Zwischenkreisspannung UZK mindestens 5 % der Amplitude der Zwischenkreisspannung UZK beträgt.

Der dem Transformator 14 zugeführte Strom setzt sich aus mindestens zwei Stromanteilen zusammen. Der eine Stromanteil dient der Übertragung der Energie zur Last 15. Der andere Stromanteil lädt und entlädt die Kondensatoreinrichtung 2 des Frequenzumrichters 1 und stellt dadurch einen Verlauf der Zwischenkreisspannung UZK ein, der in Amplitude, Frequenz und Oberschwingungsanteil etwa der Netzspannung entspricht.

Der entsprechende Betrieb des Frequenzumrichters 1 und die zugehörige Ausgestaltung der Steuereinrichtung 16 sind beispielsweise aus der bereits erwähnten DE 103 23 218 A1 bekannt.

In vielen Fällen ist die Spannung des Versorgungsnetzes 8 eine Hochspannung. Beispielsweise bei Bahnsystemen sind eine Nennspannung des Versorgungsnetzes 8 von 15 kV und eine Basisfrequenz f von 16 2/3 Hz weit verbreitet. Ein ebenfalls weit verbreitetes Spannungssystem arbeitet mit einer Nennspannung von 25 kV und einer Basisfrequenz f von 50 Hz. Auch andere Spannungssysteme sind möglich und konkret auch bekannt.

Im Falle derart hoher Spannungen - in jedem Fall oberhalb von 10 kV - ist es erforderlich, dass die eingangsseitigen und die ausgangsseitigen Halbleiter-Schalteinrichtungen 6, 12 entsprechend der Darstellung in den FIG 3 und 4 jeweils Reihenschaltungen von mehreren Halbleiterschaltern 17, 18 aufweisen. Denn die einzelnen Halbleiterschalter 17, 18 sind jeweils für eine Sperrspannung ausgelegt, die erheblich kleiner als die Amplitude der Spannung des Versorgungsnetzes 8 ist. Beispielsweise können die einzelnen Halbleiterschalter 17, 18 für eine Sperrspannung von 3,3 kV oder 6,5 kV ausgelegt sein. Die Anzahl an Halbleiterschaltern 17, 18 pro Halbleiter-Schalteinrichtung 6, 12 - also die Anzahl an jeweils in Reihe geschalteten Halbleiterschaltern 17, 18 - ist in diesem Fall derart bestimmt dass das Produkt der Sperrspannung eines einzelnen Halbleiterschalters 17, 18 mit der Anzahl an Halbleiterschaltern 17, 18 pro Halbleiter-Schalteinrichtung 6, 12 in hinreichendem Umfang oberhalb der maximal auftretenden Spannung liegt, in jedem Fall aber oberhalb von 10 kV.

Unabhängig von der Anzahl an in Reihe geschalteten Halbleiterschaltern 17, 18 gibt es aber einen wichtigen Unterschied zwischen den Halbleiterschaltern 17 der eingangsseitigen Halbleiter-Schalteinrichtungen 6 und den Halbleiterschaltern 18 der ausgangsseitigen Halbleiter-Schalteinrichtungen 12. Dieser Unterschied gilt nicht nur im Regelfall, in dem die Reihenschaltungen, welche die jeweilige Halbleiter-Schalteinrichtung 6, 12 bilden, jeweils mehrere in Reihe geschaltete Halbleiter 17, 18 aufweisen. Der Unterschied gilt auch in dem Spezialfall, in dem die jeweilige Halbleiter-Schalteinrichtung 6, 12 ausnahmsweise nur einen einzigen Halbleiterschalter 17, 18 aufweist, die Reihenschaltung also entartet ist.

Der Unterschied besteht darin, dass die Halbleiterschalter 18 der ausgangsseitigen Halbleiter-Schalteinrichtungen 12 entsprechend der Darstellung in FIG 4 als unipolare Halbleiterbauelemente auf SiC-Basis ausgebildet sind, während die Halbleiterschalter 17 der eingangsseitigen Halbleiter-Schalteinrichtungen 6 entsprechend der Darstellung in FIG 3 in der Regel als SiC-IGBTs oder als Si-IGBTs ausgebildet sind. Ausnahmsweise können aber auch die Halbleiterschalter 17 der eingangsseitigen Halbleiter-Schalteinrichtungen 6 als unipolare Halbleiterbauelemente ausgebildet sein. Als unipolare Halbleiterbauelemente kommen insbesondere MOSFETs in Frage. Es sind aber auch andersartige unipolare Halbleiterbauelemente möglich, beispielsweise JFETs.

Den einzelnen Halbleiterschaltern 17, 18 ist, wie Fachleuten allgemein bekannt ist, jeweils eine Diode parallel gegengeschaltet. Die Dioden sind in den FIG 3 und 4 der Übersichtlichkeit halber nicht mit dargestellt. Die jeweilige Diode kann als Si-Diode oder als SiC-Diode ausgebildet sein. Es kann sich alternativ um eine eigenständige Diode oder um eine strukturbedingt vorhandene Diode des jeweiligen Halbleiterschalters 17, 18 handeln.

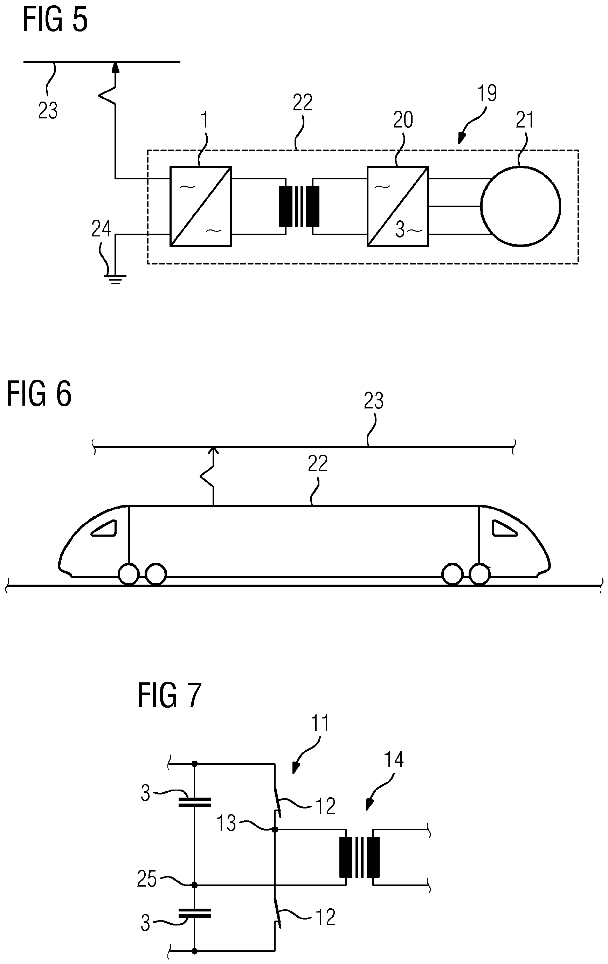

Der erfindungsgemäße Frequenzumrichter 1 kann entsprechend der Darstellung in FIG 5 insbesondere Bestandteil eines elektrischen Antriebs 19 sein. In diesem Fall ist dem Transformator 14 ein Stromrichter 20 nachgeordnet. Der Stromrichter 20 speist seinerseits mindestens eine elektrische Maschine 21. Der Stromrichter 20 ist üblicherweise als rückspeisefähiger Zwischenkreisumrichter ausgebildet. Er weist also einen eingangsseitigen Teil-Stromrichter, einen ausgangsseitigen Teil-Stromrichter und einen zwischen den beiden Teil-Stromrichtern angeordneten Kondensator auf. Der eingangsseitige Teil-Stromrichter ist mit dem Transformator 14 verbunden, der ausgangsseitige Teil-Stromrichter mit der mindestens einen elektrischen Maschine 21. Üblicherweise ist pro ausgangsseitiger elektrischer Maschine 21 jeweils ein eigener ausgangsseitiger Teil-Stromrichter vorhanden. Es ist aber auch möglich, mehrere elektrische Maschinen 21 über einen gemeinsamen ausgangsseitigen Teil-Stromrichter mit elektrischer Energie zu versorgen.

Insbesondere kann der elektrische Antrieb 19 entsprechend der Darstellung in den FIG 5 und 6 als Traktionsantrieb eines Schienenfahrzeugs 22 ausgebildet sein. In diesem Fall sind in aller Regel die eingangsseitigen Knotenpunkte 7 mit einer Oberleitung 23 verbunden. Die Oberleitung 23 bildet also in diesem Fall - zusammen mit einem Erdrückschluss 24 - das Versorgungsnetz 8.

In der bisher erläuterten Ausgestaltung des Frequenzumrichters 1 stimmt die Anzahl an ausgangsseitigen Schaltpfaden 11 mit der Anzahl an Phasen des Transformators 14 überein. Weiterhin sind die ausgangsseitigen Knotenpunkte 13 jeweils mit einer der Phasen des Transformators 14 verbunden. In analoger Weise stimmt die Anzahl an eingangsseitigen Schaltpfaden 5 mit der Anzahl an Phasen des Versorgungsnetzes 8 überein. Auch sind die eingangsseitigen Knotenpunkte 7 jeweils mit einer der Phasen des Versorgungsnetzes 8 verbunden. Diese Ausgestaltung kann jedoch modifiziert werden.

So ist es beispielsweise entsprechend der Darstellung in FIG 7 möglich, dass der ausgangsseitige Wechselrichter 10 nur einen einzelnen ausgangsseitigen Schaltpfad 11 aufweist. In diesem Fall weist die Kondensatoreinrichtung 2 entsprechend der Darstellung in FIG 7 eine Reihenschaltung von mehreren Kondensatoren 3 auf. Zwischen zwei der in Reihe geschalteten Kondensatoren 3 der Kondensatoreinrichtung 2 ist in diesem Fall ein weiterer Knotenpunkt 25 angeordnet. Über diesen Knotenpunkt 25 ist eine weitere Phase des Transformators 14 mit der Kondensatoreinrichtung 2 verbunden.

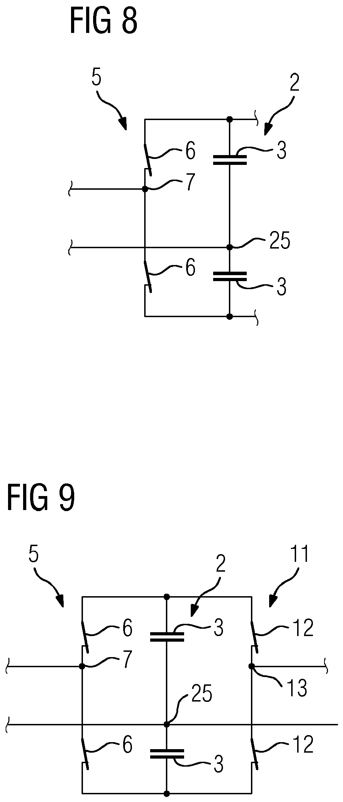

In analoger Weise ist es entsprechend der Darstellung in FIG 8 möglich, dass der eingangsseitige Wechselrichter 4 nur einen einzelnen eingangsseitigen Schaltpfad 5 aufweist. Auch in diesem Fall weist die Kondensatoreinrichtung 2 entsprechend der Darstellung in FIG 8 eine Reihenschaltung von mehreren Kondensatoren auf, wobei zwischen zwei der in Reihe geschalteten Kondensatoren 3 der Kondensatoreinrichtung 2 ein weiterer Knotenpunkt 25 angeordnet ist. Über diesen Knotenpunkt 25 ist eine weitere Phase des Versorgungsnetzes 8 mit der Kondensatoreinrichtung 2 verbunden.

Die Ausgestaltungen gemäß FIG 7 und FIG 8 können entsprechend der Darstellung in FIG 9 auch miteinander kombiniert werden.

Zusammengefasst betrifft die vorliegende Erfindung somit folgenden Sachverhalt:
Ein Frequenzumrichter 1 weist eine Kondensatoreinrichtung 2, einen eingangsseitigen Wechselrichter 4 und einen ausgangsseitigen Wechselrichter 10 auf. Der eingangsseitige Wechselrichter 4 weist eingangsseitige Schaltpfade 5 auf, die jeweils zwei in Reihe geschaltete Halbleiter-Schalteinrichtungen 6 mit einem dazwischen angeordneten Knotenpunkt 7 aufweisen. Enden der eingangsseitigen Schaltpfade 5 sind mit der Kondensatoreinrichtung 2 verbunden, die Knotenpunkte 7 mit den Phasen eines eingangsseitigen Versorgungsnetzes 8. Der ausgangsseitige Wechselrichter 10 weist ausgangsseitige Schaltpfade 11 auf, die jeweils zwei in Reihe geschaltete Halbleiter-Schalteinrichtungen 12 mit einem dazwischen angeordneten Knotenpunkt 13 aufweisen. Enden der ausgangsseitigen Schaltpfade 11 sind mit der Kondensatoreinrichtung 2 verbunden, die Knotenpunkte 13 mit den Phasen eines dem Frequenzumrichter 1 nachgeordneten Transformators 14. Die ausgangsseitigen Halbleiter-Schalteinrichtungen 12 weisen als Halbleiterschalter 18 unipolare Halbleiterbauelemente, insbesondere MOSFETs, auf.

Die vorliegende Erfindung weist viele Vorteile auf. Insbesondere ist es möglich, den einfachen Betrieb des eingangsseitigen Wechselrichters 4 vom Ansatz her unverändert beizubehalten. Weiterhin ist es möglich, die Zwischenkreisspannung UZK der idealen Sinusform sehr weitgehend anzunähern und damit Netzrückwirkungen deutlich zu reduzieren. Schließlich kann insbesondere die Anzahl an in Reihe geschalteten Halbleiterschaltern 17, 18 gering gehalten werden. Dies gilt insbesondere für die Halbleiterschalter 18 der ausgangsseitigen Halbleiter-Schalteinrichtungen 12. Schließlich können die Schaltverluste minimiert werden und kann auch die Transformatorfrequenz erhöht werden, wodurch sich vorteilhafte Betriebseigenschaften des elektrischen Antriebs 19 ergeben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Frequenzumrichter,
- wobei der Frequenzumrichter eine Kondensatoreinrichtung (2) aufweist,
- wobei der Frequenzumrichter einen eingangsseitigen Wechselrichter (4) aufweist, der seinerseits eine Anzahl von eingangsseitigen Schaltpfaden (5) aufweist, die ihrerseits jeweils zwei in Reihe geschaltete eingangsseitige Halbleiter-Schalteinrichtungen (6) und jeweils einen zwischen den beiden jeweiligen eingangsseitigen Halbleiter-Schalteinrichtungen (6) angeordneten eingangsseitigen Knotenpunkt (7) aufweisen,
- wobei Enden der eingangsseitigen Schaltpfade (5) mit der Kondensatoreinrichtung (2) verbunden sind und die eingangsseitigen Knotenpunkte (7) jeweils mit einer Phase eines eingangsseitigen Versorgungsnetzes (8) verbindbar sind,
- wobei der Frequenzumrichter einen ausgangsseitigen Wechselrichter (10) aufweist, der seinerseits eine Anzahl von ausgangsseitigen Schaltpfaden (11) aufweist, die ihrerseits jeweils zwei in Reihe geschaltete ausgangsseitige Halbleiter-Schalteinrichtungen (12) und jeweils einen zwischen den beiden jeweiligen ausgangsseitigen Halbleiter-Schalteinrichtungen (12) angeordneten ausgangsseitigen Knotenpunkt (13) aufweisen,
- wobei Enden der ausgangsseitigen Schaltpfade (11) mit der Kondensatoreinrichtung (2) verbunden sind und die ausgangsseitigen Knotenpunkte (13) jeweils mit einer Phase eines dem Frequenzumrichter nachgeordneten Transformators (14) verbindbar sind,
**dadurch gekennzeichnet , dass** die ausgangsseitigen Halbleiter-Schalteinrichtungen (12) als Halbleiterschalter (18) unipolare Halbleiterbauelemente, insbesondere MOSFETs, aufweisen.

2. Frequenzumrichter nach Anspruch 1, **dadurch gekennzeichnet, dass** die ausgangsseitigen Halbleiterschalter (18) als unipolare Halbleiterbauelemente auf SiC-Basis ausgebildet sind.

3. Frequenzumrichter nach Anspruch 1 oder 2, **dadurch gekennzeichnet, dass** die eingangsseitigen Halbleiter-Schalteinrichtungen (6) als Halbleiterschalter (17) unipolare Halbleiterbauelemente auf SiC-Basis, SiC-IGBTs oder Si-IGBTs aufweisen.

4. Frequenzumrichter nach Anspruch 1, 2 oder 3, **dadurch gekennzeichnet, dass** die eingangsseitigen und die ausgangsseitigen Halbleiter-Schalteinrichtungen (6, 12) jeweils Reihenschaltungen von mehreren Halbleiterschaltern (17, 18) aufweisen, dass die einzelnen Halbleiterschalter (17, 18) jeweils für eine Sperrspannung ausgelegt sind und dass die Anzahl an Halbleiterschaltern (17, 18) pro Halbleiter-Schalteinrichtung (6, 12) derart bestimmt ist, dass das Produkt der Sperrspannung mit der Anzahl an Halbleiterschaltern (17, 18) pro Halbleiter-Schalteinrichtung (6, 12) oberhalb von 10 kV liegt.

5. Frequenzumrichter nach einem der Ansprüche 1 bis 4, **dadurch gekennzeichnet, dass** die Anzahl an ausgangsseitigen Schaltpfaden (11) mit der Anzahl an Phasen des Transformators (14) übereinstimmt und dass die Knotenpunkte (13) der ausgangsseitigen Schaltpfade (11) jeweils mit einer der Phasen des Transformators (14) verbindbar sind.

6. Frequenzumrichter nach einem der Ansprüche 1 bis 4, **dadurch gekennzeichnet, dass** der ausgangsseitige Wechselrichter (10) nur einen einzelnen ausgangsseitigen Schaltpfad (11) aufweist, dass die Kondensatoreinrichtung (2) eine Reihenschaltung von mehreren Kondensatoren (3) aufweist und dass zwischen zwei der in Reihe geschalteten Kondensatoren (3) der Kondensatoreinrichtung (2) ein weiterer Knotenpunkt (25) angeordnet ist, über den eine weitere Phase des Transformators (14) mit der Kondensatoreinrichtung (2) verbindbar ist.

7. Frequenzumrichter nach einem der Ansprüche 1 bis 6, **dadurch gekennzeichnet, dass** die Anzahl an eingangsseitigen Schaltpfaden (5) mit der Anzahl an Phasen des Versorgungsnetzes (8) übereinstimmt und dass die Knotenpunkte (7) der eingangsseitigen Schaltpfade (5) jeweils mit einer der Phasen des Versorgungsnetzes (8) verbindbar sind.

8. Frequenzumrichter nach einem der Ansprüche 1 bis 6, **dadurch gekennzeichnet, dass** der eingangsseitige Wechselrichter (4) nur einen einzelnen eingangsseitigen Schaltpfad (5) aufweist, dass die Kondensatoreinrichtung (2) eine Reihenschaltung von mehreren Kondensatoren (3) aufweist und dass zwischen zwei der in Reihe geschalteten Kondensatoren (3) der Kondensatoreinrichtung (2) ein weiterer Knotenpunkt (25) angeordnet ist, über den eine weitere Phase des Versorgungsnetzes (8) mit der Kondensatoreinrichtung (2) verbindbar ist.

9. Elektrischer Antrieb,
- wobei der elektrische Antrieb einen Frequenzumrichter (1) nach einem der obigen Ansprüche aufweist,
- wobei dem Transformator (14) ein Stromrichter (20) nachgeordnet ist und
- wobei der Stromrichter (20) mindestens eine elektrische Maschine (21) speist.

10. Elektrischer Antrieb, **dadurch gekennzeichnet, dass** er als Traktionsantrieb eines Schienenfahrzeugs (22) ausgebildet ist und dass die eingangsseitigen Knotenpunkte (7) mit einem als Oberleitungsnetz (23) ausgebildeten Versorgungsnetz (8) verbindbar sind.
